Europäisches Patentamt

European Patent Office

Office européen des brevets

(11) Publication number: **0 600 442 A1**

## EUROPEAN PATENT APPLICATION

(21) Application number: **93119283.5**

(22) Date of filing: **30.11.93**

(51) Int. Cl.5: **B01D 53/36**, B01J 23/74

(30) Priority: **30.11.92 JP 319975/92**

(43) Date of publication of application:
**08.06.94 Bulletin 94/23**

(84) Designated Contracting States:
**DE ES FR GB SE**

(71) Applicant: **NIPPON SHOKUBAI CO., LTD.**
**1-1, Koraibashi, 4-chome**
**Chuo-ku, Osaka(JP)**

(72) Inventor: **Kida, Masahito**
**Nippon Shokubai Hamada Ryo,**
**931-11, Hamada**
**Aboshi-ku, Himeji-shi, Hyogo-ken(JP)**
Inventor: **Horiuchi, Makoto**
**2-17-2, Aoyamakita**
**Himeji-shi, Hyogo-ken(JP)**

(74) Representative: **Kraus, Walter, Dr. et al**
**Patentanwälte Kraus, Weisert & Partner**
**Thomas-Wimmer-Ring 15**
**D-80539 München (DE)**

(54) **Catalyst for purification of Diesel engine exhaust gas.**

(57) The present invention relates to a catalyst for purification of diesel engine exhaust gas, comprising iron as the active component, as well as to a catalyst for purification of diesel engine exhaust gas, comprising a refractory three-dimensional structure and a catalyst component comprising iron and a refractory inorganic oxide, deposited on the refractory three-dimensional structure.

This catalyst can remove, by combustion, harmful substances present in diesel engine exhaust gases, such as carbonaceous fine particles, unburnt hydrocarbons, carbon monoxide and the like even when said gases are at low temperatures, and further can suppress the formation of sulfates from sulfur dioxide when said gases are at high temperatures.

EP 0 600 442 A1

The present invention relates to a catalyst for purifying harmful components in exhaust gases from diesel engines. More particularly, the present invention relates to a catalyst for purification of exhaust gases from diesel engines, which can remove, by combustion, harmful substances present in diesel engine exhaust gases, such as carbonaceous fine particles, unburnt hydrocarbons, carbon monoxide and the like even when said gases are at low temperatures and which further can suppress the formation of sulfates from sulfur dioxide when said gases are at high temperatures.

In recent years, particularly the fine particle substances present in diesel engine exhaust gases have become a problem on environment and hygiene. [Said fine particles consist mainly of solid carbon fine particles, sulfur-based fine particles (e.g. sulfate fine particles) and liquid or solid high-molecular hydrocarbon fine particles, and are hereinafter referred to simply as "fine particles substances".] The problem is due to the fact that the fine particles substances, having very small diameters of 1 micro or less in most cases and being easily suspended in the air, are easily taken into human bodies by respiration. Hence, the solution to the problem is being sought by imposing a stricter regulation on the emission of fine particle substances from diesel engines.

Meanwhile, the improvements made in diesel engines, for example, fuel injection at a higher pressure and control of fuel injection timing, succeeded, to some extent, in decreasing the amount of fine particle substances emitted from diesel engine. The decrease, however, is not sufficient. Moreover, with the engine improvements such as mentioned above, it is difficult to purify the components (SOF) contained in the fine particle substances, which consist mainly of liquid high-molecular hydrocarbons such as unburnt fuel and unburnt lubricant oil and which are soluble in organic solvents, and there is tendency that the SOF content of the fine particle substances increases with the above engine improvements. Since SOF contains harmful substances, for example, carcinogenic substances, the purification of not only the fine particle substances but also SOF is an important task currently.

In order to purify the fine particle substances, it is under investigation to use a catalyst comprising a refractory three-dimentional structure (e.g. a ceramic form, a wire mesh, a metal foam, a sealed ceramic honeycomb, an open-flow ceramic honeycomb or an open-flow metallic honeycomb) and a catalytically active substance deposited thereon which has a high capability to burn carbonaceous fine particles, for the purpose of (1) capturing the fine particle substances present in diesel engine exhaust gases and further (2) removing the carbonaceous fine particles present in diesel engine exhaust gases (of ordinary compositions and ordinary temperatures) emitted under ordinary engine operation conditions, employing a heating means (e.g. an electric furnace) if necessary.

In general, a catalyst for purification of diesel engine exhaust gas is desired to have the following properties.

(a) The catalyst can purify, by combustion, harmful substances such as carbonaceous fine particles, unburnt hydrocarbons, carbon monoxide and the like at a high efficiency even when exhaust gases from diesel engine are at low temperatures.

(b) The catalyst has low oxidation capability of sulfur dioxide [derived from the sulfur component contained in a light oil (a fuel for diesel engine) in a fairly large amount] into sulfur trioxide, and accordingly the catalyst can suppress the formation of sulfates (e.g. sulfur trioxide or sulfuric acid mist) from sulfur dioxide.

(c) The catalyst can withstand continuous diesel engine operation under high loads, i.e. has high durability at high temperatures.

Various catalysts have hitherto been proposed in order to enhance the efficiency of purification of carbonaceous fine particles. For example, platinum group element type catalysts such as a rhodium (7.5%)-platinum alloy, a platinum/palladium (50/50) mixture, a catalyst comprising tantalum oxide or cerium oxide and palladium loaded thereon, a palladium-platinum (75% by weight or less) alloy and the like were disclosed in Japanese Patent Application Kokai (Laid-Open) No. 24597/1980. Accordingly to the literature, these catalysts are also effective for the removal of SOF. All the these catalysts, however, have very high oxidation capability of sulfur dioxide when the temperatures of the exhaust gases emitted from diesel engines are higher than 500°C and invite an increase in sulfate content in exhaust gas. Hence, use of these catalysts is not preferable in high-temperature diesel engine in which the temperatures of exhaust gases reach as high as about 700°C.

Catalyst compositions comprising palladium and rhodium as the main active components and, as the supplemental components, alkali metals, alkaline earth metals, copper, lanthanum, zinc, manganese, etc. were disclosed in Japanese Patent Application Kokai (Laid-Open) Nos. 129030/1986, 149222/1986 and 146314/1986. A catalyst composition, which is a combination of at least one element selected from copper, alkali metals, molybdenum and vanadium and at least one element selected from platinum, rhodium and palladium, was disclosed in Japanese Patent Application Kokai (Laid-Open) No. 82944/1984. Use of vanadium in the above catalyst composition, however, is not preferable because vanadium oxide is heavily deteriorated in diesel engine exhaust gases at 500°C or higher.

A noble metal type oxidation catalyst of open honeycomb structure having passages parallel to the flow of exhaust gas, was reported as a catalyst for purification of the SOF present in diesel engine exhaust gas, in SAE Paper 810263.

Each of the above catalysts of prior art is effective to some extent for purification of carbonaceous fine particles or SOF. However, they have high oxidation capability of sulfur dioxide particularly when the temperatures of diesel engine exhaust gases are higher than 500°C, and produce a large amount of sulfates; this reduces the efficiency of purification of total fine particles substances and further invites an environmental problem of sulfates. Thus, no satisfactory catalyst has not yet been developed which sufficiently has the above-mentioned properties (a) to (c) and the ability for SOF purification.

Hence, an object of the present invention is to provide a catalyst for purification of diesel engine exhaust gas, capable of reducing the fine particle substances present in diesel engine exhaust gases.

Another object of the present invention is to provide a catalyst for purification of diesel engine exhaust gas, which can purify, by combustion, harmful substances present in diesel engine exhaust gases, such as carbon-based fine particles, unburnt hydrocarbons, carbon monoxide and the like even when said gases are at low temperatures and which has low oxidation capability of sulfur dioxide and thereby can suppress the formation of sulfates when said gases are at high temperatures of 500°C or more.

Still another object of the present invention is to provide a catalyst for purification of diesel engine exhaust gas, capable of reducing the SOF present in diesel engine exhaust gases.

Still another object of the present invention is to provide a catalyst for purification of diesel engine exhaust gas, which has good high-temperature durability and which can be practically used in diesel engine vehicles without causing problems.

In order to achieve the above objects, the present inventors made extensive study. As a result, the present inventors found that a catalyst comprising iron shows high performance for purifying SOF, unburnt hydrocarbons, etc. present in diesel engine exhaust gases even when said exhaust gases are at low temperatures and that said catalyst further shows suppressability for oxidation of sulfur dioxide when said exhaust gases are at high temperatures exceeding 500°C.

According to the present invention, there is provided a catalyst for purification of diesel engine exhaust gas, comprising iron.

Particularly preferably, the catalyst of the present invention comprises a refractory three-dimentional structure and a catalyst component comprising iron and a refractory inorganic oxide, deposited on the refractory three-dimentional structure.

The refractory inorganic oxide is at least one oxide selected from active alumina, silica, titania, zirconia, silica-alumina, alumina-zirconia, alumina-titania, silica-titania, silica-zirconia and titania-zirconia. Of these, alumina-zirconia, titania-zirconia, silica-titania, silica-alumina, etc. are particularly preferable. These composites each consisting of two refractory inorganic oxides have solid acidity and accordingly show catalytic activities. Alumina-zirconia is most preferable because of the excellent heat resistance and durability.

As the refractory three-dimentional structure, there can be used a ceramic foam, an open-flow ceramic honeycomb, a wall-flow type monolithic honeycomb, an open-flow metallic honeycomb, a metallic foam, a metallic mesh, etc. An open-flow ceramic honeycomb or an open-flow metallic honeycomb can be preferably used when the content of fine particle substances in diesel engine exhaust gas is 100 mg or less per $m^3$ of exhaust gas and the content of SOF in said fine particle substances is 20% or more.

The amount of iron to be deposited is 0.5-50 g per liter of catalyst. When the amount is less than 0.5 g, the resulting catalyst has a low catalyst activity. When the amount is more than 50 g, the catalyst shows no further increase in activity.

The starting material for iron is not particularly restricted and can be selected from those ordinarily used in the art. There can be used, for example, metallic iron, an iron oxide, an iron carbonate, an iron nitrate, an iron hydroxide and an iron acetate.

Of those starting materials, the substances which form $\alpha\text{-Fe}_2\text{O}_3$ upon calcination are preferred, because $\alpha\text{-Fe}_2\text{O}_3$ exhibits the highest catalytic activity of all iron oxides.

The amount of the refractory inorganic oxide to be deposited is 1-300 g per liter of catalyst. When the amount is less than 1 g, the contribution of refractory inorganic oxide to catalytic activity is low. When the amount is more than 300 g, the resulting catalyst shows no further increase in activity and, when used as a refractory three-dimentional structure catalyst, tends to receive a higher back pressure.

Iron may be used by being deposited on the refractory inorganic oxide, or in the foam of a mixture with the refractory inorganic oxide.

EP 0 600 442 A1

The catalyst of the present invention may comprise a refractory three-dimentional structure and a catalyst component deposited thereon, comprising a refractory inorganic oxide and iron loaded on the refractory inorganic oxide.

The process for producing the catalyst of the present invention is not particularly restricted. The present catalyst can be produced, for example, by either of the following processes (1) and (2).

(1) A powder of a refractory inorganic oxide is wet-ground to prepare a slurry. In this slurry is immersed a refractory three-dimentional structure, and the excessive slurry is removed. The structure is then dried at 80-250°C and calcined at 300-850°C. The resulting structure is immersed in an aqueous solution containing a given amount of an iron compound, and the excessive solution is removed. The structure is then dried at 80-250°C and fired at 300-850°C to obtain an intended catalyst.

(2) A refractory inorganic oxide is added to an aqueous solution containing a given amount of an iron compound, to prepare a slurry in which a refractory inorganic oxide is impregnated with an iron compound. In the slurry is immersed a refractory three-dimentional structure, and the excessive slurry is removed. The resulting structure is dried at 80-250°C and calcined at 300-850°C to obtain an intended catalyst.

The catalyst of the present invention has excellent purification capability harmful substances present in diesel engine exhaust gases, such as carbon-based fine particles, unburnt hydrocarbons, carbon monoxide and the like even when said exhaust gases are at low temperatures, and further can suppress the formation of sulfates because the catalyst has low catalysis for oxidation of sulfur dioxide when said exhaust gases are at high temperatures exceeding 500°C. As a result, the present catalyst shows excellent capability for purification in fine particle substances present in diesel engine exhaust gases and can efficiently purify diesel engine exhaust gases into less harmful gases.

Further, the catalyst of the present invention has excellent purification capability for SOF as well and is therefore very effective for purification of diesel engine exhaust gases.

Furthermore, the present catalyst has excellent high-temperature durability and can therefore be practically used in diesel engine vehicles without causing problems.

Thus, the catalyst of the present invention has purification capability for SOF, unburnt hydrocarbons, etc. present in diesel engine exhaust gases even when said exhaust gases are at low temperatures, and further can suppress the oxidation of sulfur dioxide to 4% or less when said exhaust gases are at high temperatures of 500-700°C.

As described above, the catalyst of the present invention is very useful for purification of diesel engine exhaust gas.

The present invention is described in more detail below by way of Examples.

Example 1

1 kg of alumina having a specific surface area of 118 $m^2$/g was added to a solution of 506 g of iron nitrate dissolved in deionized water. The mixture was sufficiently stirred, then dried at 150°C for 1 hour, and calcined at 500°C for 2 hours to obtain an alumina powder having iron oxide ($Fe_2O_3$) deposited thereon. 1 kg of this alumina powder was subjected to wet grinding to obtain a slurry.

Into the slurry was immersed a cylindrical cordierite honeycomb carrier of 5.66 in. (diameter) and 6.00 in. (length) having open-flow gas passages of about 400 per $in.^2$ of cross-section. The excessive slurry was removed. The resulting honeycomb was dried at 150°C for 2 hours and then calcined at 500°C for 1 hour to obtain a catalyst.

In the catalyst, the amounts of alumina and iron oxide deposited were 50 g and 5.0 g per liter of the honeycomb structure, respectively.

Example 2

1 kg of titania having a specific surface area of 82 $m^2$/g and 100 g of an iron oxide powder were added to deionized water. The mixture was subjected to wet grinding to obtain a slurry.

In the slurry was immersed the same cordierite honeycomb carrier as used in Example 1. The excessive slurry was removed. The resulting honeycomb was dried at 150°C for 1 hour and then calcined at 700°C for 1 hour to obtain a catalyst.

In the catalyst, the amounts of titania and iron oxide deposited were 100 g and 10 g per liter of the honeycomb structure, respectively.

4

### Example 3

1 kg of silica having a specific surface area of 100 $m^2/g$ was subjected to wet grinding to obtain a slurry.

Into the slurry was immersed a cylindrical stainless steel honeycomb carrier of 5.66 in. (diameter) and 6.00 in. (length) having open-flow gas passages of about 200 per $in.^2$ of cross-section. The excessive slurry was removed. The resulting honeycomb was dried at 150°C for 1 hour and then calcined at 400°C for 1 hour to obtain a honeycomb structure having silica deposited thereon.

The honeycomb structure was immersed in 2.5 liters of a solution of 67.7 g of iron acetate dissolved in deionized water. The excessive solution was removed. The resulting honeycomb was dried at 150°C for 3 hours and then calcined at 650°C for 1 hour to obtain a catalyst.

In the catalyst, the amounts of silica and iron oxide deposited were 70 g and 3.0 g per liter of the honeycomb structure, respectively.

### Example 4

1 kg of zirconia having a specific surface area of 56 $m^2/g$ was added to solution of 101 g of iron nitrate dissolved in deionized water. The mixture was sufficiently stirred, then dried at 150°C for 1 hour, and calcined at 600°C for 1 hour to obtain a zirconia powder having iron oxide ($Fe_2O_3$) deposited thereon. 1 kg of this zirconia powder was subjected to wet grinding to obtain a slurry.

Into the slurry was immersed the same cordierite honeycomb carrier as used in Example 1. The excessive slurry was removed. The resulting honeycomb was dried at 150°C for 1 hour to obtain a catalyst.

In the catalyst, the amounts of zirconia and iron oxide deposited were 250 g and 5.0 g per liter of the honeycomb structure, respectively.

### Example 5

600 g of alumina having a specific surface area of 118 $m^2/g$ and 400 g of zirconia having a specific surface area of 56 $m^2/g$ ($Al_2O_3/ZrO_2$ weight ratio = 3/2) were added to a solution of 506 g of iron nitrate dissolved in deionized water. The mixture was sufficiently stirred and made into a slurry.

Into the slurry was immersed the same cordierite honeycomb carrier as used in Example 1. The excessive slurry was removed. The resulting honeycomb was dried at 150°C for 2 hours and calcined at 500°C for 1 hour to obtain a catalyst.

Upon analyzing the catalyst, the iron was found to have been converted to $\alpha$-$Fe_2O_3$.

In the catalyst, the amounts of alumina-zirconia and iron oxide ($\alpha$-$Fe_2O_3$) deposited were 50 g and 5.0 g per liter of the honeycomb structure, respectively.

### Example 6

167 g of alumina having a specific surface area of 118 $m^2/g$ and 833 g of zirconia having a specific surface area of 56 $m^2/g$ ($Al_2O_3/ZrO_2$ weight ratio = 1/5) were added to a solution of 193 g of iron nitrate dissolved in deionized water. The mixture was sufficiently stirred and made into a slurry.

Into the slurry was immersed the same cordierite honeycomb carrier as used in Example 1. The excessive slurry was removed. The resulting honeycomb was dried at 150°C for 1 hour and calcined at 500°C for 1 hour to obtain a catalyst.

Upon analyzing the catalyst, the iron was found to have been converted to $\alpha$-$Fe_2O_3$.

In the catalyst, the amounts of alumina-zirconia and iron oxide ($\alpha$-$Fe_2O_3$) deposited were 180 g and 10 g per liter of the honeycomb structure, respectively.

### Example 7

444 g of alumina having a specific surface area of 118 $m^2/g$ and 556 g of zirconia having a specific surface area of 56 $m^2/g$ ($Al_2O_3/ZrO_2$ weight ratio = 4/5) were added to a solution of 527 g of iron acetate dissolved in deionized water. The mixture was sufficiently stirred and made into a slurry.

Into the slurry was immersed the same cordierite honeycomb carrier as used in Example 1. The excessive slurry was removed. The resulting honeycomb was dried at 150°C for 2 hours and calcined at 650°C for 1 hour to obtain a catalyst.

Upon analyzing the catalyst, the iron was found to have been converted to $\alpha$-$Fe_2O_3$.

In the catalyst, the amounts of alumina-zirconia and iron oxide ($\alpha$-$Fe_2O_3$) deposited were 90 g and 30 g per liter of the honeycomb structure, respectively.

Example 8

167 g of titania having a specific surface area of 82 $m^2$/g and 833 g of zirconia having a specific surface area of 56 m$g^2$/g ($TiO_2$/$ZrO_2$ weight ratio = 1/5) were added to a solution of 506 g of iron nitrate dissolved in deionized water. The mixture was sufficiently stirred and made into a slurry.

Into the slurry was immersed the same cordierite honeycomb carrier as used in Example 1. The excessive slurry was removed. The resulting honeycomb was dried at 150°C for 2 hours and calcined at 500°C for 1 hour to obtain a catalyst.

In the catalyst, the amounts of titania-zirconia and iron oxide ($Fe_2O_3$) deposited were 50 g and 5.0 g per liter of the honeycomb structure, respectively.

Example 9

444 g of titania having a specific surface area of 82 $m^2$/g and 556 g of zirconia having a specific surface area of 56 $m^2$/g ($TiO_2$/$ZrO_2$ weight ratio = 4/5) were added to a solution of 132 g of iron acetate dissolved in deionized water. The mixture was sufficiently stirred and made into a slurry.

Into the slurry was immersed the same cordierite honeycomb carrier as used in Example 1. The excessive slurry was removed. The resulting honeycomb was dried at 150°C for 2 hours and calcined at 650°C for 1 hour to obtain a catalyst.

In the catalyst, the amounts of titania-zirconia and iron oxide ($Fe_2O_3$) deposited were 120 g and 10 g per liter of the honeycomb structure, respectively.

Example 10

167 g of titania having a specific surface area of 82 $m^2$/g and 833 g of silica having a specific surface area of 100 $m^2$/g ($TiO_2$/$ZrO_2$ weight ratio = 1/5) were added to a solution of 506 g of iron nitrate dissolved in deionized water. The mixture was sufficiently stirred and made into a slurry.

Into the slurry was immersed the same cordierite honeycomb carrier as used in Example 1. The excessive slurry was removed. The resulting honeycomb was dried at 150°C for 1 hour and calcined at 500°C for 1 hour to obtain a catalyst.

In the catalyst, the amounts of titania-silica and iron oxide ($Fe_2O_3$) deposited were 50 g and 5.0 g per liter of the honeycomb structure, respectively.

Example 11

444 g of titania having a specific surface area of 82 $m^2$/g and 556 g of silica having a specific surface area of 100 $m^2$/g ($TiO_2$/$SiO_2$ weight ratio = 4/5) were added to a solution of 226 g of iron nitrate dissolved in deionized water. The mixture was sufficiently stirred and made into a slurry.

Into the slurry was immersed the same cordierite honeycomb carrier as used in Example 1. The excessive slurry was removed. The resulting honeycomb was dried at 150°C for 2 hours and calcined at 650°C for 1 hour to obtain a catalyst.

In the catalyst, the amounts of titania-silica and iron oxide ($Fe_2O_3$) deposited were 70 g and 10 g per liter of the honeycomb structure, respectively.

Example 12

167 g of alumina having a specific surface area of 60 $m^2$/g and 833 g of titania having a specific surface area of 100 $m^2$/g ($Al_2O_3$/$TiO_2$ weight ratio = 1/5) were added to a solution of 506 g of iron nitrate dissolved in deionized water. The mixture was sufficiently stirred and made into a slurry.

Into the slurry was immersed the same cordierite honeycomb carrier as used in Example 1. The excessive slurry was removed. The resulting honeycomb was dried at 150°C for 1 hour and calcined at 500°C for 1 hour to obtain a catalyst.

Upon analyzing the catalyst, the iron was found to have been converted to $\alpha$-$Fe_2O_3$.

In the catalyst, the amounts of alumina-titania and iron oxide ($\alpha$-$Fe_2O_3$) deposited were 50 g and 5.0 g per liter of the honeycomb structure, respectively.

Comparative Example 1

A catalyst was obtained in the same manner as in Example 1 except that 22.8 g of copper nitrate was dissolved in deionized water. In the catalyst, the amounts of alumina and copper oxide deposited were 50 g and 3.0 g per liter of the honeycomb structure, respectively.

Comparative Example 2

A catalyst was obtained in the same manner as in Example 1 except that 158 of chromium nitrate was dissolved in deionized water. In the catalyst, the amounts of alumina and chromium oxide deposited were 50 g and 3.0 g per liter of the honeycomb structure, respectively.

Comparative Example 3

A catalyst was obtained in the same manner as in Example 1 except that 20 of (as palladium) of palladium nitrate was dissolved in deionized water. In the catalyst, the amounts of alumina and palladium deposited were 50 g and 1.0 g per liter of the honeycomb structure, respectively.

Comparative Example 4

A catalyst was obtained in the same manner as in Example 1 except that 20 of (as platinum) of chloroplatinic acid was dissolved in deionized water. In the catalyst, the amounts of alumina and platinum deposited were 50 g and 1.0 g per liter of the honeycomb structure, respectively.

Comparative Example 5

A catalyst was obtained in the same manner as in Example 1 except that 20 g (as rhodium) of rhodium nitrate was dissolved in deionized water. In the catalyst, the amounts of alumina and rhodium deposited were 50 g and 1.0 g per liter of the honeycomb structure, respectively.

In Table 1 are shown the amounts of the individual components deposited on the catalysts obtained in Examples 1-12 and Comparative Examples 1-5.

Table 1

| | Active component | | Refractory inorganic oxide | | Three-dimensional structure | |
|---|---|---|---|---|---|---|
| | Type | Amount (g/l of carrier) | Type | Amount (g/l of carrier) | Type | cells/cm$^2$ |
| Example 1 | $Fe_2O_3$ | 5.0 | $Al_2O_3$ | 50 | ceramic honeycomb | 400 |
| 2 | $Fe_2O_3$ | 10 | $TiO_2$ | 100 | ceramic honeycomb | 400 |
| 3 | $Fe_2O_3$ | 3.0 | $SiO_2$ | 70 | ceramic honeycomb | 200 |
| 4 | $Fe_2O_3$ | 5.0 | $ZrO_2$ | 250 | ceramic honeycomb | 400 |
| 5 | $\alpha\text{-}Fe_2O_3$ | 5.0 | $Al_2O_3/ZrO_2$ (weight ratio=3/2) | 50 | ceramic honeycomb | 400 |
| 6 | $\alpha\text{-}Fe_2O_3$ | 10 | $Al_2O_3/ZrO_2$ (weight ratio=1/5) | 180 | ceramic honeycomb | 400 |
| 7 | $\alpha\text{-}Fe_2O_3$ | 30 | $Al_2O_3/ZrO_2$ (weight ratio=4/5) | 90 | ceramic honeycomb | 300 |
| 8 | $Fe_2O_3$ | 5.0 | $TiO_2/ZrO_2$ (weight ratio=1/5) | 50 | ceramic honeycomb | 400 |
| 9 | $Fe_2O_3$ | 10 | $TiO_2/ZrO_2$ (weight ratio=4/5) | 120 | ceramic honeycomb | 300 |
| 10 | $Fe_2O_3$ | 5.0 | $TiO_2/SiO_2$ (weight ratio=1/5) | 50 | ceramic honeycomb | 400 |
| 11 | $Fe_2O_3$ | 10 | $TiO_2/SiO_2$ (weight ratio=4/5) | 70 | ceramic honeycomb | 400 |
| 12 | $\alpha\text{-}Fe_2O_3$ | 5.0 | $Al_2O_3/TiO_2$ (weight ratio=1/5) | 50 | ceramic honeycomb | 400 |

Table 1 (continued)

| | Active component | | Refractory inorganic oxide | | Three-dimensional structure | |
|---|---|---|---|---|---|---|
| | Type | Amount (g/l of carrier) | Type | Amount (g/l of carrier) | Type | cells/cm$^2$ |
| Comparative Example 1 | CuO | 3.0 | $Al_2O_3$ | 50 | ceramic honeycomb | 400 |
| 2 | $Cr_2O_3$ | 3.0 | $Al_2O_3$ | 50 | ceramic honeycomb | 400 |
| 3 | Pd | 1.0 | $Al_2O_3$ | 50 | ceramic honeycomb | 400 |
| 4 | Pt | 1.0 | $Al_2O_3$ | 50 | ceramic honeycomb | 400 |
| 5 | Rh | 1.0 | $Al_2O_3$ | 50 | ceramic honeycomb | 400 |

Each of the catalysts obtained above was measured for the activity for conversion of diesel engine exhaust gas by the following methods (1), (2) and (3). The results are shown in Table 2. In the measurement, there were used, as a test engine, a supercharged direct ignition diesel engine (4 cylinders and 2,800 cc) and, as a test fuel, a gas oil containing 0.38% by weight of sulfur.

(1) The contents of fine particle substances in exhaust gas at the inlet and outlet of catalyst bed were measured by the ordinary dilution tunnel method, under the stable conditions of engine rpm = 2,000 and catalyst inlet temperature = 400°C or 600°C, whereby a conversion (%) of fine particle substances was calculated.

(2) The fine particle substances in exhaust gas at the inlet and outlet of catalyst bed, which were captured by a dilution tunnel, were each subjected to extraction with a dichloromethane solution. Using the weight change of fine particle substances before and after extraction, the amount of SOF present in each of the two exhaust gases were calculated, whereby a conversion (%) of SOF was calculated.

(3) The exhaust gases before entering the catalyst bed and after passing through the catalyst bed were measured for $SO_2$ and gaseous hydrocarbons, whereby their conversions (%) were calculated.

Table 2

| | Conversion (%) of : | | | | | | | |
| --- | --- | --- | --- | --- | --- | --- | --- | --- |
| | fine particle substances | | SOF | | hydrocarbons | | sulfur dioxide | |
| | 400°C | 600°C | 400°C | 600°C | 400°C | 600°C | 400°C | 600°C |
| Example 1 | 21 | 12 | 49 | 75 | 45 | 76 | 0 | 1.5 |
| 2 | 23 | 13 | 51 | 72 | 47 | 77 | 0 | 1.3 |
| 3 | 23 | 12 | 48 | 76 | 44 | 74 | 0 | 2.1 |
| 4 | 22 | 14 | 50 | 73 | 45 | 75 | 0 | 1.4 |
| 5 | 27 | 16 | 58 | 83 | 60 | 86 | 0 | 1.2 |
| 6 | 26 | 15 | 61 | 80 | 60 | 84 | 0 | 1.3 |
| 7 | 26 | 16 | 57 | 82 | 58 | 84 | 0 | 1.4 |
| 8 | 25 | 15 | 55 | 80 | 56 | 81 | 0 | 1.5 |
| 9 | 24 | 14 | 55 | 81 | 55 | 80 | 0 | 1.3 |
| 10 | 24 | 14 | 52 | 82 | 55 | 80 | 0 | 1.4 |
| 11 | 24 | 15 | 53 | 83 | 53 | 81 | 0 | 1.4 |
| 12 | 23 | 15 | 55 | 81 | 57 | 82 | 0 | 1.3 |
| Comparative Example 1 | 6 | -126 | 21 | 56 | 26 | 66 | 0 | 17 |
| 2 | 13 | -285 | 32 | 69 | 38 | 85 | 0 | 35 |
| 3 | -86 | -505 | 76 | 88 | 75 | 93 | 21 | 62 |
| 4 | -220 | -676 | 82 | 86 | 91 | 92 | 48 | 76 |
| 5 | 21 | -342 | 39 | 87 | 42 | 92 | 0 | 42 |

10

**Claims**

1. A catalyst for conversion of diesel engine exhaust gas, comprising iron as the active component.

2. A catalyst for conversion of diesel engine exhaust gas, comprising a refractory three-dimensional structure and a catalyst component comprising iron and a refractory inorganic oxide, deposited on the refractory three-dimensional structure.

3. The catalyst set forth in claim 2, wherein the refractory inorganic oxide is at least one oxide selected from the group consisting of active alumina, silica, titania, zirconia, silica-alumina, alumina-zirconia, alumina-titania, silica-titania, silica-zirconia and titania-zirconia.

4. The catalyst set forth in claim 2, wherein the refractory three-dimensional structure is an open-flow ceramic honeycomb or an open-flow metallic honeycomb.

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | EP-A-0 449 423 (NIPPON SHOKUBAI KK) * the whole document * | 1-4 | B01D53/36 B01J23/74 |
| X | DE-A-34 30 870 (DIDIER ENGINEERING) * claim 1 * | 1 | |
| A | EP-A-0 462 593 (NIPPON SHOKUBAI) * the whole document * | 2-4 | |

TECHNICAL FIELDS
SEARCHED      (Int.Cl.5)

B01D
B01J

The present search report has been drawn up for all claims

| Place of search | Date of completion of the search | Examiner |
|---|---|---|
| THE HAGUE | 10 March 1994 | Bogaerts, M |

EPO FORM 1503 03.82 (P04C01)